# EUROPEAN PATENT APPLICATION

(11) **EP 2 581 725 A2**
(43) Date of publication of application: **17.04.2013**
(21) Application number: 12188051.2
(22) Date of filing: 10.10.2012
(51) Int. Cl.: G01M 13/04

(54) **Methods and systems for automatic rolling-element bearing fault detection**

(30) Priority: 13.10.2011 US 201113272978
(71) Applicant: General Electric Company, Schenectady, NY 12345 (US)
(72) Inventor: Hatch, Charles Terrance, Minden, NV 89423 (US); Weiss, Adam Anthony, Minden, NV 89423 (US); Roaldson, Ryan Gregory, Minden, NV 89423 (US)
(74) Representative: Illingworth-Law, William Illingworth

(57) **Abstract**

A system (100) capable of automatically detecting a rolling-element bearing (106) fault in a rotating machine (101) is provided. The system (100) receives, from at least one sensor (110), a sensor signal that includes at least one frequency and converts the sensor signal to a digital vibration signal. The system (100) modifies the vibration signal to generate an envelope signal and applies a transform to the enveloped signal to generate an envelope spectrum. The system (100) uses certain relationships among envelope spectral line amplitudes and their harmonics to detect bearing faults. As such, the system (100) detects a bearing fault without reference to predefined fault frequencies.

## Description

### BACKGROUND OF THE INVENTION

The present application relates generally to rotating machines and, more particularly, to methods and systems for use in detecting rolling-element bearing faults in a rotating machine.

At least some known power generation systems, such as wind turbines, include a generator that supplies electrical power to an electrical grid or to another power distribution system. Such generators are driven by a rotating drive shaft that is supported by bearings. A bearing monitoring system is sometimes used to monitor the bearings and/or other rotating elements.

At least some known bearing monitoring systems execute an enveloping algorithm on an incoming signal, such as a vibration signal. More specifically, such algorithms enable identification of particular frequencies within the incoming signal that may suggest a bearing fault. The particular frequencies that suggest a bearing fault vary depending on the bearing, the power generation system, and other factors. Therefore, at least some known bearing monitoring systems are generally only capable of detecting bearing faults that produce expected frequencies. Thus, a bearing monitoring system may ignore some frequencies that may be indicative of bearing faults simply because the bearing monitoring system is not configured to examine such frequencies. Accordingly, systems are needed which automatically detect bearing faults without reference to frequencies of known bearing defects.

### BRIEF DESCRIPTION OF THE INVENTION

According to one embodiment, a monitoring system is provided. The monitoring system includes at least one sensor configured to detect a frequency of at least one rotating component being monitored. The monitoring system also includes a processor programmed to receive, from the at least one sensor, a sensor signal that includes at least one frequency indicative of a predetermined condition, convert the sensor signal to a digital vibration signal, generate an envelope spectrum from the digital vibration signal, and detect a bearing fault based on a fundamental frequency of the envelope spectrum and a first detection threshold.

According to another embodiment, a bearing monitoring system is provided. The bearing monitoring system includes a processor programmed to receive, from at least one sensor, a sensor signal that includes at least one frequency indicative of a predetermined condition, convert the sensor signal to a digital vibration signal, generate an envelope spectrum from the digital vibration signal, and detect a bearing fault based on a fundamental frequency of the envelope spectrum and a first detection threshold.

According to another embodiment, a method of monitoring a rotating machine is provided. The method includes receiving, from at least one sensor monitoring the machine, a sensor signal that includes at least one frequency indicative of a predetermined condition, converting the sensor signal to a digital vibration signal, generating an envelope spectrum from the digital vibration signal, and detecting a bearing fault in the machine based on a fundamental frequency of the envelope spectrum and a first detection threshold.

### BRIEF DESCRIPTION OF THE DRAWINGS

FIG. 1 is a block diagram of an exemplary bearing monitoring system.
FIG. 2 is a block diagram of an exemplary bearing analysis system that may be used with the monitoring system shown in FIG. 1.
FIG. 3 is a flow diagram of an exemplary method that may be used to automatically detect a bearing fault using the bearing analysis system shown in FIG. 2.
FIG. 4 is a graphical representation of an exemplary envelope spectrum that may be generated using the bearing analysis system shown in FIG. 2.

### DETAILED DESCRIPTION OF THE INVENTION

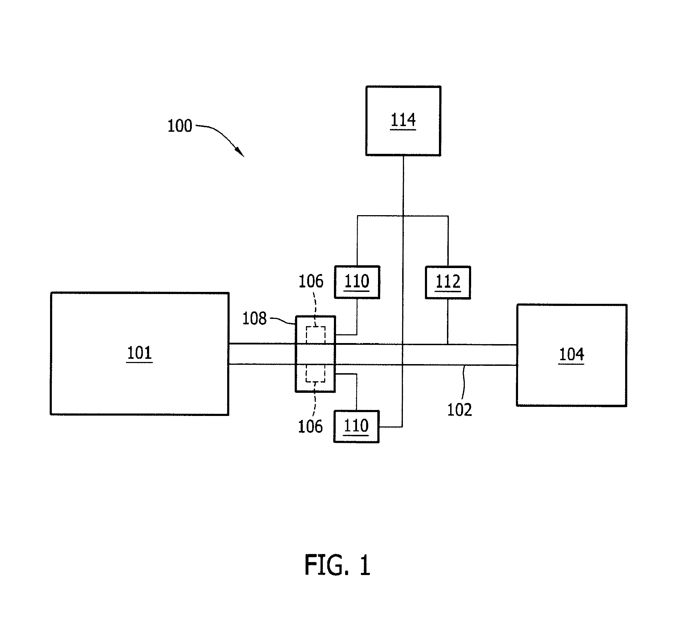

FIG. 1 illustrates an exemplary bearing monitoring system 100 that may be used to monitor a rotating machine 101. In the exemplary embodiment, machine 101 is a variable speed machine, such as a wind turbine, a hydroelectric generator, and/or any other rotating machine that operates with a variable speed. Alternatively, machine 101 may be a synchronous speed machine. In the exemplary embodiment, machine 101 drives a drive shaft 102 that is coupled to a load 104. Drive shaft 102 is at least partially supported by one or more bearings 106 housed within a support structure 108, such as a gearbox. Alternatively, bearings 106 may be housed within load 104, and/or within any suitable structure that enables bearings 106 to support drive shaft 102.

In the exemplary embodiment, bearings 106 are maintained in rotational contact with drive shaft 102 and support structure 108. If one or more bearings 106 develops a crack, spall, or any other defect, each of those bearings 106 may oscillate or "ring" (hereinafter referred to as a "ring event") at a natural frequency of support structure 108 when the area of the defect on the bearing 106 contacts drive shaft 102 and/or support structure 108 during rotation of drive shaft 102. Generally, one or more ring events occur at a frequency that is proportional to a rotational speed of machine 101.

Ring events generally induce vibrations into support structure 108 and/or bearings 106. One or more vibration sensors 110, such as accelerometers, detect and measure the ring event vibrations and transmit a signal representative of the vibration measurements to a signal processing system 114 for processing and/or analysis. In the exemplary embodiment, signal processing system 114 is a bearing analysis system, and more specifically, each vibration sensor 110 transmits a signal, such as a vibration signal, to signal processing system 114. The vibration signal includes a plurality of frequency components, such as, without limitation, one or more shaft vibration frequencies, and/or one or more noise frequencies. Moreover, the vibration signal may include one or more frequencies, such as one or more bearing defect frequencies. A speed sensor 112 measures a rotational speed of drive shaft 102 and transmits one or more signals indicative of the speed measurements to bearing analysis system 114 for processing and/or analysis. In the exemplary embodiment, speed sensor 112 may measure a rotational speed of drive shaft 102 at a plurality of different times during each revolution of drive shaft 102. More specifically, in the exemplary embodiment, speed sensor 112 is an angular encoder that produces an event, or an encoder signal, at substantially equally angularly-spaced positions of drive shaft 102. Alternatively, speed sensor 112 may be an optical sensor that detects a once-per-turn mark on drive shaft 102. Such events or marks may be used to determine a rotational speed of drive shaft 102. Moreover, in the exemplary embodiment, measurements from vibration sensor 110 and/or any other suitable sensor are acquired, or sampled, synchronously with respect to the events.

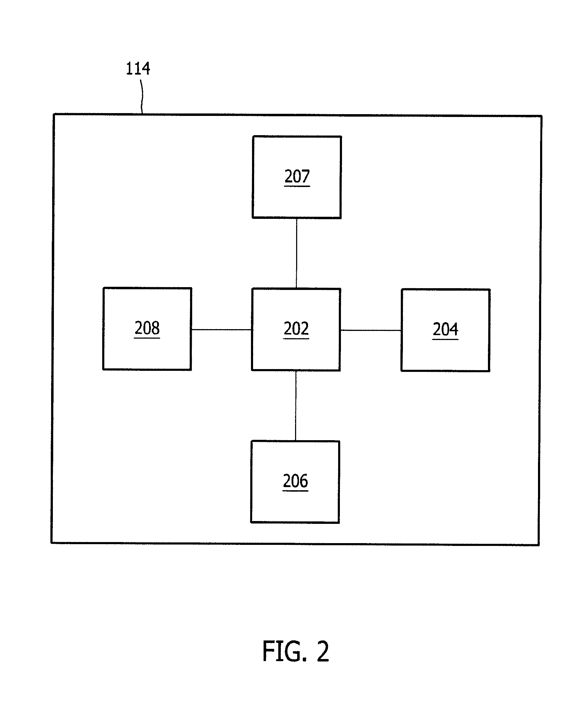

FIG. 2 is a block diagram of an exemplary bearing analysis system 114 that may be used to analyze an operation of machine 101 (shown in FIG. 1). In the exemplary embodiment, system 114 includes a processor 202, a display 204, a memory 206, a human interface device 207, and a communication interface 208. Display 204, memory 206, and communication interface 208 are each coupled to, and are in data communication with, processor 202. In one embodiment, at least one of processor 202, display 204, memory 206, and/or communication interface 208 is positioned within a remote system (not shown) that is communicatively coupled to system 114.

Processor 202 includes any suitable programmable system including one or more systems and microcontrollers, microprocessors, reduced instruction set circuits (RISC), application specific integrated circuits (ASIC), programmable logic circuits (PLC), field programmable gate arrays (FPGA), and/or any other circuit capable of executing the functions described herein. The above examples are exemplary only, and thus are not intended to limit in any way the definition and/or meaning of the term "processor."

Display 204 includes, without limitation, a liquid crystal display (LCD), a cathode ray tube (CRT), a plasma display, and/or any suitable visual output device capable of displaying graphical data and/or text to a user.

Memory 206 includes a computer readable medium, such as, without limitation, a hard disk drive, a solid state drive, a diskette, a flash drive, a compact disc, a digital video disc, random access memory (RAM), and/or any suitable storage device that enables processor 202 to store, retrieve, and/or execute instructions and/or data. Memory 206 may include one or more local and/or remote storage devices. In one embodiment, memory 206 stores data from vibration sensor 110 and/or speed sensor 112 (both shown in FIG. 1), such as one or more values of a vibration signal and/or a speed signal.

Human interface device 207 is coupled to processor 202 and receives input from a user. Human interface device 207 may include, for example, a keyboard, a pointing device, a mouse, a stylus, a touch sensitive panel (e.g., a touch pad or a touch screen), a gyroscope, an accelerometer, a position detector, and/or an audio input interface (e.g., including a microphone).

Communication interface 208 may include, without limitation, a network interface controller (NIC), a network adapter, a transceiver, and/or any suitable communication device that enables system 114 to operate as described herein. Communication interface 208 may connect to a network (not shown) and/or to one or more data communication systems using any suitable communication protocol, such as a wired Ethernet protocol or a wireless Ethernet protocol.

In the exemplary embodiment, processor 202 executes instructions and/or accesses data stored in memory 206 to analyze and/or process measurements and/or signals from one or more vibration sensors 110 and/or speed sensors 112 (both shown in FIG. 1). Processor 202 receives the signals indicative of the sensed measurements and detects a bearing fault, as described in more detail below.

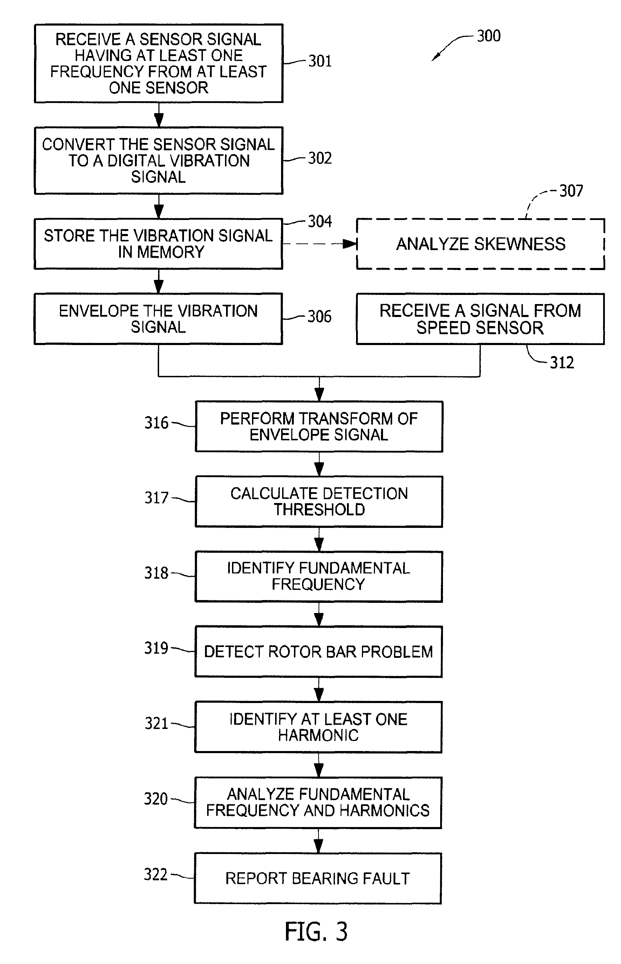

FIG. 3 is a flow diagram of an exemplary method 300 of detecting a bearing fault by analyzing a vibration signal. In the exemplary embodiment, method 300 is executed by system 114 (shown in FIG. 2) and/or by any other suitable system that enables a frequency to be identified as described herein. Instructions and/or data for method 300 are stored in a computer readable medium, such as memory 206 (shown in FIG. 2), and the instructions are executed by processor 202 (shown in FIG. 2) to perform the method 300.

In the exemplary embodiment, system 114 and/or processor 202 receives 301 a sensor signal having at least one frequency from at least one sensor. For example, an analog vibration signal from vibration sensor 110 (shown in FIG. 1) may be received 301. Alternatively, system 114 and/or processor 202 may receive 301 any suitable signal from vibration sensor 110. Each signal received 301 is then converted 302 to a digital vibration signal that may be stored 304 in memory 206 for at least one revolution of machine 101 (shown in FIG. 1), i.e., until drive shaft 102 (shown in FIG. 1) has rotated through one complete revolution. The vibration signal is then modified 306 by enveloping or demodulating the signal using a suitable enveloping algorithm. In one embodiment, before the vibration signal is modified 306, the signal may be high-pass filtered, band-pass filtered, low-pass filtered, rectified, and/or smoothed during the demodulation process. In the exemplary embodiment, the filtered vibration signal is modified by replacing the signed amplitude with an unsigned or direct amplitude before enveloping 306. Alternatively, or additionally, the vibration signal may be analyzed 307 to detect skewness before the signal is modified 306 using any known technique. If a skewness, or the absolute value of a skewness, is above a predefined threshold, the implementation of method 300 may be aborted. For example, a skewness with an absolute value above one may indicate that electrical noise is present in the vibration signal. If the implementation of method 300 is aborted due to skewness, processor 202 may display or communicate a message indicating the cause of the abortion.

When the vibration signal is modified 306, one or more high frequency components of the original vibration signal are removed and an envelope signal, having a lower frequency than a frequency of the original vibration signal, is produced. If the vibration signal includes one or more bearing defect frequencies, the envelope signal includes one or more amplitude peaks that may repeat at a bearing defect repetition frequency. In the exemplary embodiment, the bearing defect repetition frequency is proportional to, or approximately equal to, the rotational frequency of drive shaft 102. As drive shaft 102 may rotate at a variable speed, the bearing defect repetition frequency may vary throughout each revolution of drive shaft 102 and/or throughout the vibration signal.

After the vibration signal is enveloped 306, system 114 and/or processor 202 performs a transform 316 on the enveloped signal to generate an envelope spectrum. In the exemplary embodiment, the transform 316 is a Fast Fourier Transform. Alternatively, the transform 316 may be any digital Fourier transform or any other transform that enables method 300 to be implemented, and to function, as described herein.

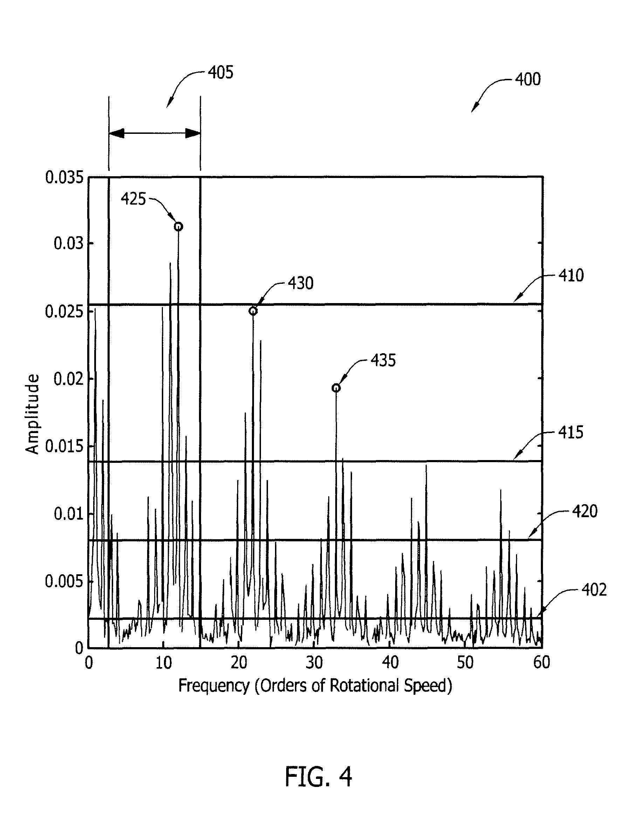

System 114 and/or processor 202 also receives 312 one or more signals indicative of speed measurements from speed sensor 112 (shown in FIG. 1). In one embodiment, the speed signals are converted to digital data (i.e., speed data) within system 100. Alternatively, the speed data is a predefined value based on a rotational speed of drive shaft 102 and as suggested by theory or dictated by design. In the exemplary embodiment, system 114 and/or processor 202 uses the speed data to convert the envelope spectrum into orders of the speed data. For example, if the envelope spectrum were displayed on a graph, such as graph 400 shown in FIG. 4, the Y-axis may be the amplitude of the enveloped spectrum and the X-axis may be the frequency in ascending orders of the speed data, i.e., the rotational speed of drive shaft 102.

Referring to both FIGS. 3 and 4, system 114 and/or processor 202 calculates a median 402 or noise floor and a standard deviation of frequencies within a fault frequency range 405 of the vibration signal. Fault frequency range 405 may include the entire range of the vibration signal or a predetermined range that is smaller than the entire range. In the exemplary embodiment, fault frequency range 405 is selected to be a frequency range that is most likely to contain rolling-element bearing fault frequencies, such as between about 2.75 * rotational speed to about 15 * rotational speed.

Using the median and standard deviation, system 114 and/or processor 202 calculates 317 at least one detection threshold. A detection threshold is calculated 317 according to the following formula: median + predefined detection factor * standard deviation. The predefined detection factor is preferably an integer, such as 1, 2, or 4. In the exemplary embodiment, three detection thresholds are calculated 317: a first or fundamental threshold 410, a second threshold 415, and a third threshold 420, using predefined detection factors 4, 2, and 1, respectively. Alternatively, a mean may be used rather than the median.

System 114 and/or processor 202 identifies 318 any peak that exceeds the fundamental threshold within the fault frequency range. Peaks may be identified 318 using any known technique for distinguishing and/or locating peaks or local maxima. The frequency of any peak exceeding the fundamental threshold is saved to memory 206 and is hereafter referred to as a "fundamental frequency" 425. More than one fundamental frequency 425 may be identified 318 within the fault frequency range and saved to memory 206.

Some false positives may be reduced by detecting 319 and ignoring vibrations caused by rotor bars in electrical machines. For example, if any fundamental frequency 425 is approximately (i.e., +/- 5%, +/- 10%, or +/- 25%) twice that of an electrical line frequency, that fundamental frequency 425 may be indicative of a problem with the rotor bar and not a bearing. The electrical line frequency is the frequency of the electrical current generated by machine 101 as measured by at least one sensor (not shown) or a predetermined value that may be stored in memory 206. If a possible rotor bar problem is detected, system 114 and/or processor 202 may report a possible rotor bar problem using display 204 or communication interface 208.

For each fundamental frequency 425, system 114 and/or processor 202 analyzes 320 whether fundamental frequency 425 is suggestive of a bearing fault. The first phase of the analysis includes identifying 321 a first harmonic 430 and a second harmonic 435 of the fundamental frequency. The first 430 and second 435 harmonics are identified 321 by locating local spectrum lines nearest to double and triple the fundamental frequency, respectively.

The next phase of analysis 320 includes comparing the first 430 and second 435 harmonics with the second 415 and third 420 thresholds using a test set to determine whether the vibration signal suggests a bearing fault. More specifically, the test set may include determining (a) whether the amplitude of first harmonic 430 is greater than second threshold 415, (b) whether the amplitude of first harmonic 430 is greater than a predefined peak ratio multiplied by the amplitude of fundamental frequency 425, (c) whether the amplitude of first harmonic 430 is less than the amplitude of fundamental frequency 425, (d) whether the amplitude of second harmonic 435 is greater than third threshold 420, and/or (e) whether the amplitude of second harmonic 435 is less than the amplitude of first harmonic 430. In the exemplary embodiment, the predefined peak ratio is 0.5.

In the exemplary embodiment, a bearing fault is detected when no rotor bar problem is detected and all tests in the test set are determined to be true. Rotor bar tests are performed and bearing faults are detected for each fundamental frequency 425. If a possible bearing fault is detected among any of the fundamental frequencies 425, system 114 and/or processor 202 may report the bearing fault 322 by displaying a message using display 204 and/or by transmitting a signal using communication interface 208 indicative of a possible bearing fault. The message may include the fundamental frequency 425 of each bearing fault and/or the direct amplitude of the vibration signal or the filtered vibration signal.

It should be appreciated that any of the predefined values and/or parameters used in implementing method 300, such as, but not limited to, the speed data, an electrical line frequency, corners for the band pass filter, the predefined skewness threshold, the fault frequency range, the predetermined detection factors and the predefined peak ratio are configurable to facilitate adjustment of method 300. More specifically, such predefined values and parameters may be input using human interface device 207 or communication interface 208, or stored in memory 206 for use by processor 202.

System 114 facilitates automatically detecting bearing defect frequencies from rotating machines. As compared to known systems which may be limited to detecting only known defect frequencies, system 114 is capable of detecting defect frequencies without reference to known defect frequencies. Known detection systems look for a predetermined set of frequencies known to indicate a bearing fault. In contrast, system 114 acquires measurements from vibration sensor 110 and detects patterns suggestive of a bearing fault. As such, method 300 operates without any knowledge of the particular bearings in use and/or of the frequencies at which bearing faults are expected to be detected. Moreover, in contrast to known systems, system 114 may only need band pass filter corners, a skewness threshold, a fault frequency range expressed as a multiple of the rotational shaft speed, at least one detection factor, and a peak ratio in addition to the inputs of the vibration signal, rotational shaft speed and electrical line frequency.

The above-described embodiments provide efficient and cost-effective systems and methods for use in automatically detecting a bearing fault in a rotating machine. The methods described herein envelope a vibration signal and apply a transform to the enveloped data in orders of rotational shaft speed. The methods use certain relationships among envelope spectral line amplitudes and their harmonics to detect bearing faults. As such, the methods detect a bearing fault without reference to predefined fault frequencies. Moreover, the methods are designed to ignore false positive sources such as induction motor rotor bar passage, generator electrical noise, generator bearing fluting (EDM), and/or gearbox mesh harmonics by specifically rejecting induction motor rotor bar effects and identifying the complex patterns of spectral harmonics that are characteristic of actual bearing faults.

Exemplary embodiments of methods and systems for automatically detecting a bearing fault in a rotating machine are described above in detail. The methods and systems are not limited to the specific embodiments described herein, but rather, components of the systems and/or steps of the methods may be utilized independently and separately from other components and/or steps described herein. For example, the methods may also be used in combination with other measuring systems and methods, and are not limited to practice with only the rotating machine as described herein. Rather, the exemplary embodiment can be implemented and utilized in connection with many other power system applications.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A monitoring system comprising:
   at least one sensor configured to detect a frequency of at least one rotating component being monitored; and
   a processor programmed to:
      receive, from the at least one sensor, a sensor signal that includes at least one frequency indicative of a predetermined condition;
      convert the sensor signal to a digital vibration signal;
      generate an envelope spectrum from the digital vibration signal; and
      detect a bearing fault based on a fundamental frequency of the envelope spectrum and a first detection threshold.
2. A monitoring system in accordance with Clause 1, wherein said processor is further programmed to detect a skewness of the digital vibration signal.
3. A monitoring system in accordance with Clause 1 or Clause 2, wherein said processor is further programmed to filter the digital vibration signal.
4. A monitoring system in accordance with any preceding Clause, wherein said processor is further programmed to generate a direct amplitude of the digital vibration signal.
5. A monitoring system in accordance with any preceding Clause, wherein said processor is further programmed to:
   analyze a relationship between a first harmonic frequency of the fundamental frequency and a second detection threshold; and
   analyze a relationship between a second harmonic frequency of the fundamental frequency and a third detection threshold.
6. A monitoring system in accordance with any preceding Clause, further comprising a display, said processor is further programmed to report a bearing fault on said display.
7. A bearing monitoring system, comprising:
   a processor programmed to:
      receive, from at least one sensor, a sensor signal that includes at least one frequency indicative of a predetermined condition;
      convert the sensor signal to a digital vibration signal;
      generate an envelope spectrum from the digital vibration signal; and
      detect a bearing fault based on a fundamental frequency of the envelope spectrum and a first detection threshold.
8. A bearing monitoring system in accordance with any preceding Clause, wherein said processor is further programmed to detect a skewness of the digital vibration signal.
9. A bearing monitoring system in accordance with any preceding Clause, wherein said processor is further programmed to filter the digital vibration signal.
10. A bearing monitoring system in accordance with any preceding Clause, wherein said processor is further programmed to generate a direct amplitude of the digital vibration signal.
11. A bearing monitoring system in accordance with any preceding Clause, wherein said processor is further programmed to:
   analyze a relationship between a first harmonic frequency of the fundamental frequency and a second detection threshold; and
   analyze a relationship between a second harmonic frequency of the fundamental frequency and a third detection threshold.
12. A bearing monitoring system in accordance with any preceding Clause, further comprising a display, said processor is further programmed to report a bearing fault on said display.
13. A method of monitoring a rotating machine, said method comprising:
   receiving, from at least one sensor monitoring the machine, a sensor signal that includes at least one frequency indicative of a predetermined condition;
   converting the sensor signal to a digital vibration signal;
   generating an envelope spectrum from the digital vibration signal; and
   detecting a bearing fault in the machine based on a fundamental frequency of the envelope spectrum and a first detection threshold.
14. A method in accordance with any preceding Clause, further comprising detecting a skewness of the digital vibration signal before generating an envelope spectrum from the digital vibration signal.
15. A method in accordance with any preceding Clause, further comprising filtering the digital vibration signal before generating an envelope spectrum from the digital vibration signal.
16. A method in accordance with any preceding Clause, further comprising generating a direct amplitude of the digital vibration signal before generating an envelope spectrum from the digital vibration signal.
17. A method in accordance with any preceding Clause, wherein generating an envelope spectrum comprises performing a Fast Fourier Transform.
18. A method in accordance with any preceding Clause, further comprising:
   analyzing a relationship between a first harmonic frequency of the fundamental frequency and a second detection threshold; and
   analyzing a relationship between a second harmonic frequency of the fundamental frequency and a third detection threshold.
19. A method in accordance with any preceding Clause, further comprising reporting the fundamental frequency.
20. A method in accordance with any preceding Clause, further comprising detecting a rotor bar noise, wherein detecting a rotor bar noise comprises comparing the fundamental frequency with an electrical line frequency.

## Claims

1. A monitoring system (100) comprising:
at least one sensor (110) configured to detect a frequency of at least one rotating component being monitored; and
a processor (202) programmed to:
receive, from the at least one sensor (110), a sensor signal that includes at least one frequency indicative of a predetermined condition;
convert the sensor signal to a digital vibration signal;
generate an envelope spectrum from the digital vibration signal; and
detect a bearing fault based on a fundamental frequency of the envelope spectrum and a first detection threshold.

2. A monitoring system (100) in accordance with Claim 1, wherein said processor (202) is further programmed to detect a skewness of the digital vibration signal.

3. A monitoring system (100) in accordance with Claim 1 or Claim 2, wherein said processor (202) is further programmed to filter the digital vibration signal.

4. A monitoring system (100) in accordance with any preceding Claim, wherein said processor (202) is further programmed to generate a direct amplitude of the digital vibration signal.

5. A monitoring system (100) in accordance with any preceding Claim, wherein said processor (202) is further programmed to:
analyze a relationship between a first harmonic frequency of the fundamental frequency and a second detection threshold; and
analyze a relationship between a second harmonic frequency of the fundamental frequency and a third detection threshold.

6. A monitoring system (100) in accordance with any preceding Claim, further comprising a display (204), said processor (202) is further programmed to report a bearing (106) fault on said display.

7. A bearing monitoring system (100), comprising:
a processor (202) programmed to:
receive, from at least one sensor (110), a sensor signal that includes at least one frequency indicative of a predetermined condition;
convert the sensor signal to a digital vibration signal;
generate an envelope spectrum from the digital vibration signal; and
detect a bearing fault based on a fundamental frequency of the envelope spectrum and a first detection threshold.

8. A bearing monitoring system (100) in accordance with Claim 7, wherein said processor (202) is further programmed to detect a skewness of the digital vibration signal.

9. A bearing monitoring system (100) in accordance with Claim 7 or Claim 8, wherein said processor (202) is further programmed to filter the digital vibration signal.

10. A bearing monitoring system (100) in accordance with any of Claims 7 to 9, wherein said processor (202) is further programmed to generate a direct amplitude of the digital vibration signal.

11. A method of monitoring a rotating machine, said method comprising:
receiving, from at least one sensor monitoring the machine, a sensor signal that includes at least one frequency indicative of a predetermined condition;
converting the sensor signal to a digital vibration signal;
generating an envelope spectrum from the digital vibration signal; and
detecting a bearing fault in the machine based on a fundamental frequency of the envelope spectrum and a first detection threshold.

12. A method in accordance with Claim 11, further comprising detecting a skewness of the digital vibration signal before generating an envelope spectrum from the digital vibration signal.

13. A method in accordance with Claim 11 or Claim 12, further comprising filtering the digital vibration signal before generating an envelope spectrum from the digital vibration signal.

14. A method in accordance with any of Claims 11 to 13, further comprising generating a direct amplitude of the digital vibration signal before generating an envelope spectrum from the digital vibration signal.

15. A method in accordance with any of Claims 11 to 14, wherein generating an envelope spectrum comprises performing a Fast Fourier Transform.
